# EUROPÄISCHE PATENTSCHRIFT

(11) **EP 4 488 774 B1**
(45) Veröffentlichungstag und Bekanntmachung des Hinweises auf die Patenterteilung: **26.08.2026**
(21) Anmeldenummer: 23183180.1
(22) Anmeldetag: 04.07.2023
(51) Int. Cl.: G05B 19/042

(54) **VERFAHREN UND ANORDNUNG ZUM GESICHERTEN ZUGRIFF AUF EINE INDUSTRIELLE AUTOMATISIERUNGSKOMPONENTE**
METHOD AND ARRANGEMENT FOR SECURELY ACCESSING AN INDUSTRIAL AUTOMATION COMPONENT
PROCÉDÉ ET DISPOSITIF D'ACCÈS SÉCURISÉ À UN COMPOSANT D'AUTOMATISATION INDUSTRIELLE

(43) Veröffentlichungstag der Anmeldung: 08.01.2025
(73) Patentinhaber: Siemens Aktiengesellschaft, 80333 München (DE)
(72) Erfinder: Lopez Padilla, Diego Gerardo, 90459 Nürnberg (DE); Scheurer, Matthias, 76744 Wörth (DE)
(74) Vertreter: Siemens Patent Attorneys

(56) Entgegenhaltungen:
- EP-B1- 2 193 406
- EP-B1- 2 859 705
- US-A1- 2006 026 672

## Beschreibung

Die Erfindung betrifft ein Verfahren zum gesicherten Zugriff auf eine industrielle Automatisierungskomponente gemäß dem Oberbegriff des Patentanspruchs 1, und eine Anordnung zum gesicherten Zugriff auf eine industrielle Automatisierungskomponente gemäß dem Oberbegriff des Patentanspruchs 14.

In industriellen Automatisierungsanordnungen sind regelmäßig eine Vielzahl computergesteuerter Automatisierungskomponenten, beispielsweise Bedien- und Beobachtungsgeräte (HMI - Human Maschine Interface), speicherprogrammierbare Steuerungen (SPS), Computer, Maschinen und dergleichen verbaut, die eine grafische Benutzeroberfläche aufweisen und die von beschäftigten Personen (OP - Operator) bedient werden.

Insbesondere in größeren oder schlecht zu schützenden Fertigungsumgebungen sind die Produktionsmaschinen oder anderen Automatisierungskomponenten regelmäßig gegen unautorisierte Zugriffe geschützt, sodass eine Person (im Folgenden auch Bedienperson genannt) sich zunächst authentifizieren muss, bevor sie auf kritische Informationen zugreifen kann oder kritische Operationen in die Wege leiten kann.

Klassischerweise erfolgt die Authentifizierung in den meisten Fällen durch die Eingabe eines Benutzernamens und eines Passworts (beispielsweise an den gebräuchlichen HMI-Panels) oder durch personifizierte Ausweise und zugehörige drahtlose Lesegeräte, die in der Regel mittels RFID-Technik auf kurze Distanz drahtlos funktionieren. Ein Beispiel dafür ist das System Simatic RF 1000 des Herstellers Siemens.

Die Druckschrift EP 2 859 705 B1 - Fries et al. "AUTORISIERUNG EINES NUTZERS DURCH EIN TRAGBARES KOMMUNIKATIONSGERÄT" zeigt eine Authentifizierung durch einen QR-Code, der auf der Automatisierungskomponente aufgebracht ist und von einem mobilen Gerät eingescannt wird, wonach im Hintergrund die Authentifizierung anhand der Identität des mobilen Gerätes erfolgt.

Die Druckschrift EP 2 193 406 B1 - Falk et al. "VERFAHREN ZUR ZUGRIFFSKONTROLLE AUF EINE AUTOMATISIERUNGSANLAGE" offenbart, dass durch die Zugriffskontrolle vorgegebene Zugriffsrechte vom Betriebszustand der Automatisierungsanlage abhängen, wobei zumindest in einem Notfall unabhängig von den Zugriffsrechten im Normalbetrieb erweiterte Zugriffsrechte gewährt werden.

Die Veröffentlichung US 2006/0026672 A1 - Braun "SECURITY SYSTEM AND METHOD FOR AN INDUSTRIAL AUTOMATION SYSTEM" sieht zur Autorisierung von Zugriffen auf eine Automatisierungskomponente ein spezielles "security access device" als ein elektronischer Schlüssel vor, der mit einem Sicherheits-Interface der Automatisierungskomponente kommuniziert.

Die gebräuchlichen Maßnahmen zur Zugangskontrolle sind bekannterweise jeweils mit spezifischen Nachteilen behaftet. Bei den gebräuchlichen Passwörtern neigen Benutzer dazu, zu einfache oder leicht zu erratende Passwörter zu benutzen, bei PIN-Eingaben können durch Brute-Force-Attacken Zugriffe erzwungen werden, Zugriffsinformationen (sogenannte Credentials) können vergessen werden, und in Fällen, in denen ein Display keine Touch-Oberfläche aufweist, werden zusätzliche Eingabemittel wie Tastatur oder Computer-Maus benötigt.

Bei den bereits erwähnten elektronischen Ausweisen (ID-Cards) kann es passieren, dass diese Karten entwendet und durch nicht autorisiertes Personal missbräuchlich verwendet werden, die Karten können auch vergessen werden, oder das auf diesen Zugangskarten gespeicherte Zertifikat kann ausgelaufen und somit ungültig sein. Darüber hinaus haben die beschriebenen Wege zur Authentifizierung und Autorisierung den Nachteil, dass die entsprechenden Personen, beispielsweise im Servicefall oder im Notfall, zuerst als Nutzer im System angelegt/registriert werden müssen, danach müssen Zugangsinformationen (Karten, Benutzernamen, Passwörter oder dergleichen) erzeugt und den Personen ausgehändigt werden.

Die beschriebenen Nachteile treten insbesondere dann störender Weise auf, wenn bei einer Maschinenstörung oder einem anderen außergewöhnlichen Ereignis ein Betriebszustand an der Automatisierungskomponente eingetreten ist, für den kurzfristig spezialisiertes externes Wartungspersonal hinzugezogen und für die entsprechende Automatisierungskomponente freigeschaltet werden muss. Im Stand der Technik ist dazu kein optimiertes Set-up für industrielle "Gastzugänge" bekannt, zudem ermöglichen die beschriebenen Verfahren aus dem Stand der Technik keine Multi-Faktor-Authentifizierung, wie man sie beispielsweise vom Online-Banking und anderen Anwendungen kennt.

Ein weiterer Nachteil bekannter Automatisierungskomponenten und deren grafischer Benutzeroberflächen besteht darin, dass diese zwar für den täglichen Betrieb ausreichend dimensioniert sind, aber in einem Alarm- oder Wartungsfall die dabei erforderliche erhöhte Ergonomie nicht leisten können, insbesondere zu wenige situationsspezifische Informationen darstellen können und oft auch unzureichende Ein- und Ausgabemittel (beispielsweise nur ein Touch-Display, aber keine Tastatur oder dergleichen) aufweisen, die in besonderen Situationen hilfreich oder gar erforderlich sind.

Es ist also eine Aufgabe der vorliegenden Erfindung, die Authentifizierung - insbesondere von externem Bedienpersonal - bei industriellen Automatisierungskomponente zu vereinfachen und insbesondere bei Notfällen und ähnlichen Betriebszuständen den Zugriff auf industrielle Automatisierungskomponente zu verbessern.

Es ist eine Kernidee zur Lösung der erfindungsgemäßen Aufgabe, insbesondere bei Auftreten besonderer Betriebszustände (beispielsweise im Fehlerfall) spezifische, elektronische Zugangsinformationen für eine situationsbedingt erforderliche Bedienperson zu erzeugen und zusammen mit spezifischen Informationen über die derzeitige Situation, beispielsweise Informationen über ein vorliegenden Fehler und Anweisungen oder Hilfsmittel dazu, wie dieser Fehler zu beheben ist, an ein mobiles Gerät der avisierten Bedienperson zu übermitteln und dort zu speichern. Bei Eintreffen dieser Bedienperson an der betroffenen Automatisierungskomponente kann sich diese Person dann mittels der Zugangsinformation an der Automatisierungskomponente anmelden. Dies geschieht ähnlich wie mit einer RFID-gestützten Zugangskarte oder wie der Zahlvorgang mit einem berührungslosen Zahlverfahren an der Supermarktkasse. Dabei ist es der Bedienperson möglich, mit dem mobilen Gerät auf die zuvor übertragenen spezifischen Informationen zuzugreifen und auch das mobile Gerät als Bedien- oder Eingabemittel für die Automatisierungskomponente zu verwenden, beispielsweise durch die Eingabe und Übertragung von Befehlen, das Downloaden von Diagnosesoftware oder einer neuen Betriebssoftware oder dergleichen. Die letztgenannten Schritte müssen dabei nicht zwingend über das RFID-Funkmodul der Automatisierungskomponente erfolgen, sondern können über einen Internetzugang des mobilen Gerätes an die Fabrik und damit an die Automatisierungskomponente übermittelt werden, wozu vorteilhaft mit den spezifischen Informationen bereits die entsprechenden Adressinformationen und dergleichen an das mobile Gerät übermittelt worden sind.

Die Aufgabe wird insbesondere durch das Verfahren gemäß Patentanspruch 1 und durch die Anordnung gemäß Patentanspruch 14 gelöst.

Dabei wird ein Verfahren zum gesicherten Zugriff auf eine industrielle Automatisierungskomponente mittels eines mobilen Gerätes vorgeschlagen, wobei die Automatisierungskomponente für einen unautorisierten Zugriff gesperrt ist, wobei die Automatisierungskomponente mit einer Funkeinheit zum Empfang drahtlos übermittelter Zugangsinformationen ausgestattet ist, und wobei auf dem mobilen Gerät eine Zugangsinformation gespeichert und bei Aufenthalt in der Nähe zu der Automatisierungskomponente an die Funkeinheit übertragen und in der Automatisierungskomponente geprüft wird und danach im positiven Fall die Automatisierungskomponente zum Zugriff freigegeben wird. Dabei wird in einem ersten Schritt zumindest eine für einen aktuellen Betriebszustand zuständige Bedienperson ausgewählt, in einem zweiten Schritt wird durch die Automatisierungskomponente oder eine zugeordnete Serverkomponente eine für die ausgewählte Bedienperson bestimmte oder ggf. personifizierte Zugangsinformation ausgewählt oder erstellt, in einem dritten Schritt werden spezifische Informationen über den Betriebszustand und die Zugangsinformation zu dem mobilen Gerät der Bedienperson übertragen, und in einem vierten Schritt erlangt die Bedienperson mittels der Zugangsinformation Zugriff auf die Automatisierungskomponente und nimmt mithilfe der spezifischen Informationen durch das mobile Gerät Eingaben oder andere Bedienhandlungen an der Automatisierungskomponente vor. Mit diesem Verfahren kann insbesondere im Servicefall eine Bedienperson einen situationsbezogen gestalteten Zugriff auf die betroffene Automatisierungskomponente erlangen, die notwendigen Informationen bereitgestellt bekommen und sich mittels seines persönlichen mobilen Gerätes bei der Automatisierungskomponente authentifizieren und diese bedienen.

Die Aufgabe wird außerdem durch eine Anordnung zum gesicherten Zugriff auf eine industrielle Automatisierungskomponente mittels eines mobilen Gerätes gelöst. Dabei ist die Automatisierungskomponente mit einem Funkmodul zum Austausch von Zugangsinformationen mit einem mobilen Gerät ausgestattet, wobei die Automatisierungskomponente oder ein mit ihr verknüpfter Server zu einer auf einen aktuellen Betriebszustand der Automatisierungskomponente bezogenen Generierung der Zugangsinformation für eine ausgewählte Bedienperson und zur Erstellung von spezifischen Informationen über den Betriebszustand und zu einer Übertragung der Zugangsinformation und der spezifischen Informationen zu dem mobilen Gerät eingerichtet ist, wobei das mobile Gerät zur Authentifizierung der Bedienperson gegenüber der Automatisierungskomponente mittels Übertragung der Zugangsinformation zu dem Funkmodul eingerichtet ist, und wobei das mobile Gerät zur Anzeige und/oder Nutzung der spezifischen Informationen für eine Bedienung oder Beeinflussung der Automatisierungskomponente eingerichtet ist. Mit dieser Vorrichtung können die bereits anhand des Verfahrens diskutierten Vorteile erzielt werden.

Vorteilhafte Ausgestaltungen des erfindungsgemäßen Verfahrens sind in den abhängigen Patentansprüchen angegeben. Die dabei angegebenen Merkmale und deren Vorteile gelten sinngemäß auch für die erfindungsgemäße Anordnung bzw. Vorrichtung. Die damit erläuterten Ausgestaltungen können sowohl einzeln, als auch in sinnvoller Kombination miteinander realisiert werden.

Das Verfahren kann besonders vorteilhaft eingesetzt werden, wenn der Betriebszustand eine Störung, Fehler, Alarmzustand oder ein anderes Ereignis ist und die Verfahrensschritte beim Auftreten eines solchen Ereignisses initiiert werden. In einem solchen Fall kann beispielsweise ein externer Berater oder Spezialist als Bedienperson herangezogen werden, wobei dieser Bedienperson dann vorteilhaft schon mit der Beauftragung die erforderlichen Informationen und die erforderliche Zugangsberechtigung in Gestalt der elektronischen Zugangsinformation auf sein persönliches mobiles Gerät, beispielsweise Smartphone oder Tablet-Computer, gesendet werden kann. Die Zugangsinformation kann bei solchen Personen, die nicht regelmäßig Zugang zur Fabrikationsstätte oder der spezifischen Automatisierungskomponente haben, auch zeitlich eingeschränkt sein. Diese zeitliche Einschränkung kann entweder digital in der Zugangsinformation, also beispielsweise einem digitalen Zertifikat, gespeichert sein, sie kann aber auch in der fabrikseitigen Infrastruktur, insbesondere in der betroffenen Automatisierungskomponente, hinterlegt sein, sodass außerhalb eines zeitlich spezifizierten Rahmens kein Zugang gewährt wird. Vorteilhaft ist die Zugangsinformation derart personalisiert, dass diese nur zusammen mit dem persönlichen mobilen Gerät der Bedienperson bzw. zusammen mit deren biometrischen Eingaben (zum Beispiel Fingerabdruck, Gesichtserkennung) aktiviert werden kann. In einer weiteren Ausgestaltung kann der Bedienperson auch als mehr-Faktor-Authentifizierung eine weitere geheime Information, beispielsweise eine Aktivierung-PIN, auf einem weiteren Wege zugestellt werden, wobei diese weitere geheime Information dann entweder am mobilen Gerät zur Aktivierung der Zugangsinformation oder an der betroffenen Automatisierungskomponente eingegeben werden muss. Vorteilhaft kann die Zugangsinformation oder eine zeitnah parallel versendete weitere Zugangsinformation temporär den Zutritt zu einem Gebäude oder Gelände und damit den Zugang zu der Automatisierungskomponente mittels automatischer Zutrittskontrollsysteme ermöglichen.

Vorteilhaft ist dabei vorgesehen, dass anhand einer Identität oder anhand von gespeicherten Qualifikationen oder anhand zugeordneter personenbezogener Restriktionen die jeweilige Zugangsberechtigung (sachlich und zeitlich) der jeweiligen Bedienperson insbesondere zu dem Benutzerinterface der Automatisierungskomponente festgelegt wird und diese festgelegte Zugangsberechtigung mit der jeweiligen Zugangsinformation verknüpft wird und damit die nachfolgenden Zugriffe der jeweiligen Bedienperson entsprechend eingeschränkt oder freigegeben wird. Damit ist es möglich, den Zugriff der ausgewählten Person auf die neben Informationen und Funktionen der Automatisierungskomponente zu beschränken, die einer allgemeinen Berechtigung dieser Person entsprechen und die zur Lösung des gerade anstehenden Problems notwendig sind. Fallweise können diese Beschränkungen oder Freigaben auch bei ein- und derselben Person unterschiedlich ausfallen, je nach dem Ereignis, welches der gegenwärtigen Erzeugung der Zugangsberechtigung zugrunde liegt.

Das Verfahren wird vorteilhaft eingesetzt, wenn als die Automatisierungskomponente ein industrielles Bedien- und Beobachtungsgerät oder eine Steuerungseinrichtung für einen industriellen Prozess oder eine Fertigungsautomatisierung verwendet wird. Solche Automatisierungskomponente weisen bereits regelmäßig die erforderliche Rechenleistung auf und können leicht mit einem Funkmodul bzw. Lesegerät für die drahtlose Zugangsinformation ausgestattet werden. Weiter sind solche Automatisierungskomponente regelmäßig an einem Datennetzwerk angebunden, sodass bedienen Handlungen, die am mobilen Gerät vorgenommen werden, nicht zwangsläufig mittels der für die Anmeldung an dem Gerät verwendeten Funkverbindung oder einer anderen direkten Funkkopplung, beispielsweise mittels des Bluetooth-Protokolls, vorgenommen werden müssen, sondern dass der weitere Datenaustausch zwischen dem mobilen Gerät und der betroffenen Automatisierungskomponente über das beschriebene Datennetzwerk stattfinden kann. So kann beispielsweise auf der Automatisierungskomponente oder einem daran angeschlossenen Server ein Webserver gestartet werden, und auf dem mobilen Gerät kann ein Webbrowser gestartet werden, sodass nach einer Konfigurierung der entsprechenden Zugangsinformationen und URLs ein Nutzerinterface der Automatisierungskomponente auf dem mobilen Gerät dargestellt werden kann. Damit ist es dann auch möglich, Dateien, insbesondere Software-Installationen, von dem mobilen Gerät auf die Automatisierungskomponente hochzuladen und dort zu installieren. Selbst verständlich kann eine solche Übertragung von Software auch auf anderem Wege erfolgen.

In einer alternativen Variante können die spezifischen Informationen auch eine spezielle Anwendung enthalten oder zu dieser verweisen, also einer sogenannten App, die auf dem mobilen Gerät gestartet wird und die eine Benutzeroberfläche zur Bedienung oder "Reparatur "der Automatisierungskomponente dient. Der daraus resultierende Datenverkehr zwischen der Automatisierungskomponente und dem mobilen Gerät kann wie beschrieben über das Internet und das Intranet der Fabrik erfolgen, kann jedoch auch auf direktem Wege beispielsweise mittels einer Bluetooth-Verbindung oder einer ad-hoc-WLAN-Verbindung zwischen der Automatisierungskomponente und dem mobilen Gerät erfolgen.

Wie beschrieben ist die Funkeinheit zum Austausch von Informationen mittels eines RFID-Protokolls eingerichtet, insbesondere zu einem bidirektionalen Datenaustausch. Alternativen sind möglich, insbesondere die Verwendung des Bluetooth-Protokolls oder einer anderen Kurzstrecken-Funkverbindung. Die Verwendung solcher Kurzstrecken-Funkverbindungen ist deswegen besonders vorteilhaft, weil damit sichergestellt werden kann, dass sich die Bedienperson beim Zugang zu der bzw. Zugriff auf die Automatisierungskomponente in deren unmittelbarer Nähe befindet und nicht etwa versehentlich oder gar missbräuchlich aus der Ferne heraus zugreift. Insbesondere ist es möglich, dass als Zugangsinformation auf dem Display des mobilen Gerätes ein QR-Code angezeigt wird, der durch eine Kamera der Automatisierungskomponente eingelesen wird und bei entsprechender Übereinstimmung danach der Zugang erfolgt. In einer wiederum vorteilhaften Variante ist es auch möglich, dass die Automatisierungskomponente mit einem QR-Code versehen ist, der durch die Kamera des mobilen Gerätes aufgenommen wird und wobei dann innerhalb des mobilen Gerätes oder durch einen mit dem mobilen Gerät in Verbindung stehenden Server mit der Zugangsinformation verglichen wird, wonach dann über die Datenverbindung des mobilen Gerätes, ein entsprechendes Gateway zum Automatisierungsnetzwerk und damit über das fabrikeigene Datennetz der Zugang auf die Automatisierungskomponente freigeschaltet wird.

Vorteilhaft werden die spezifischen Informationen und die Zugangsinformation gebündelt zu dem mobilen Gerät übertragen werden, insbesondere zu einer industriellen Applikation des mobilen Gerätes. Im einfachsten Fall werden diese Informationen in einer SMS-Nachricht, E-Mail oder in einer Nachricht eines sozialen Netzwerkes übertragen. Die Bündelung stellt sicher, dass nicht versehentlich oder aufgrund eines technischen Fehlers eine der beiden Informationseinheiten von der anderen getrennt und nicht oder anderweitig übertragen wird. Besonders vorteilhaft ist es möglich, eine kleine Anwendung, also eine spezielle App, auf dem mobilen Gerät zu betreiben, die die gebündelten Informationen empfängt, die Zugangsinformation in einem speziellen Speicherbereich bzw. Informationsspeicher ("Wallet") des mobilen Gerätes speichert und die anderen Informationen dem Benutzer über eine spezielle grafische Benutzeroberfläche zugänglich macht. Insbesondere kann eine solche Anwendung bzw. App auch eine speziell designte graphische Benutzeroberfläche für die industrielle Automatisierungskomponente darstellen, wobei anhand der spezifischen Informationen auch aus einer Reihe verfügbarer Benutzeroberflächen die geeignete oder richtige ausgewählt und konfiguriert werden kann.

Wie bereits erwähnt kann vorteilhaft der spezielle Speicherbereich bzw. Informationsspeicher ("Wallet") mit biometrischen Informationen oder Eigenschaften der jeweiligen Bedienperson geschützt wird, wobei sich die Bedienperson mittels dieser biometrischen Informationen oder Eigenschaften vor einer Übertragung der Zugangsinformation zu der Automatisierungskomponente an dem mobilen Gerät identifiziert. Auch die weiteren Informationen bzw. die durch die beschriebene App oder einen Browser des mobilen Gerätes dargestellte Benutzeroberfläche kann zusätzlich noch durch solche biometrischen Informationen, persönliche Eigenschaften, Passwort oder PIN geschützt werden.

Vorteilhaft sind im Gesamtsystem viele mögliche Personen für viele falsch verschiedene Einsatzfälle hinterlegt, wobei anhand des aktuellen Betriebszustandes eine Anzahl geeigneter Bedienpersonen aus dieser Anzahl verfügbarer Bedienpersonen ausgewählt und den mobilen Geräten dieser ausgewählten Bedienpersonen die spezifischen Informationen und die jeweilige Zugangsinformation übermittelt werden. Dabei kann auch vorgesehen sein, dass eine der benachrichtigten Personen den mit der Benachrichtigung verbundenen Auftrag annimmt, insbesondere durch eine Bestätigung an seinem mobilen Gerät, und die anderen benachrichtigten Personen dadurch eine Absage übermittelt bekommen. Es kann auch ein hierarchisches Benachrichtigungskonzept realisiert werden, sodass zunächst die bestgeeignete Person informiert wird, und in dem Fall, in dem diese Person die Benachrichtigung nicht positiv quittiert, die nächstbeste geeignete Person durch Übermittlung der genannten Informationen informiert wird, usw.

Vorteilhaft werden die Bedienpersonen aufgrund gespeicherter vorhergehender manueller Auswahlen von Bedienpersonen oder anhand von den verfügbaren Bedienpersonen zugeordneten Fähigkeiten in Bezug zu vergleichbaren Betriebszuständen automatisch vorgeschlagen oder ausgewählt. So ist sichergestellt, dass keine ungeeigneten bedienen Personen konsultiert werden.

Vorteilhaft sind die übermittelten spezifischen Informationen auf die aktuelle Sachlage damit auf den aktuellen Betriebszustand der Automatisierungskomponente oder der damit verbundenen digitalen Fabrik angepasst, wobei insbesondere mit den spezifischen Informationen eine Handlungsanweisung und/oder digitale Hilfsmittel und/oder eine für den aktuellen Betriebszustand angepasste Software-Variante oder andere Dateien für die Automatisierungskomponente an das mobile Gerät übermittelt werden. Dabei kann beispielsweise nach einer Freigabe durch die Bedienperson die angepasste Software-Variante oder eine Datei oder Bedienbefehle von dem mobilen Gerät zu der Automatisierungskomponente übermittelt werden.

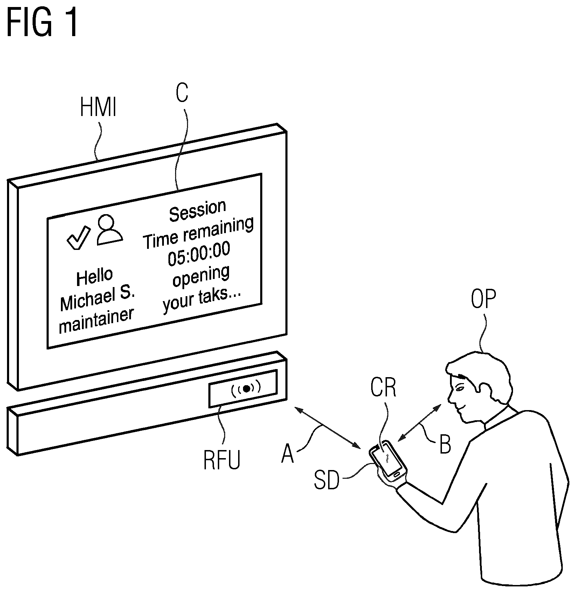

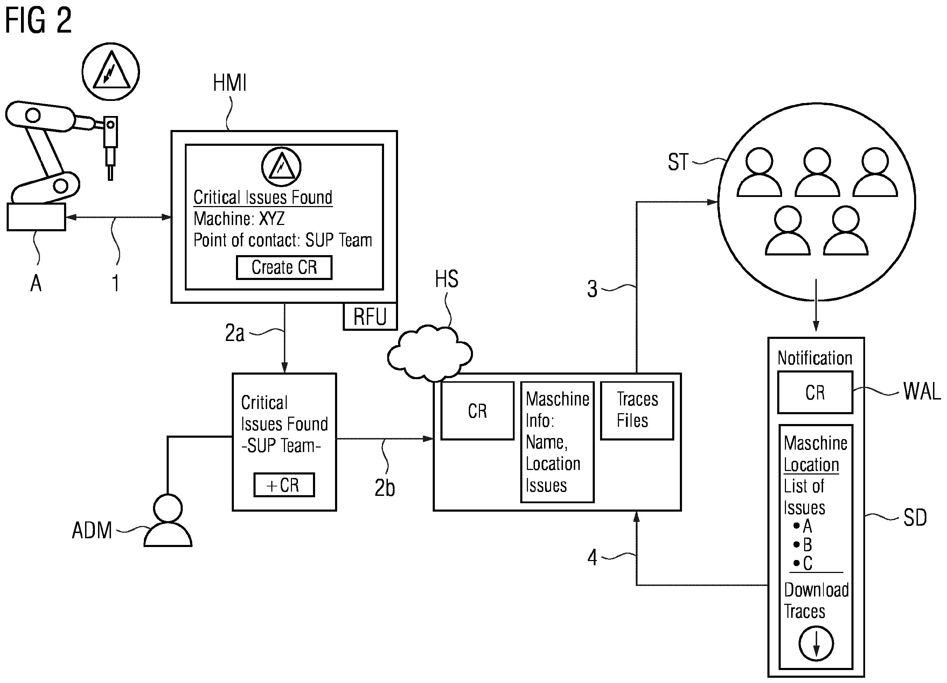

Ein Ausführungsbeispiel des erfindungsgemäßen Verfahrens und der erfindungsgemäßen Vorrichtung wird nachfolgend anhand der Zeichnung erläutert. Die mit der Figur 1 eingeführten Bezugszeichen gelten auch für die Erläuterungen in Bezug auf die Figur 2 und umgekehrt. Dabei zeigen:
- Figur 1: in schematischer Darstellung den drahtlosen Zugriff auf eine Automatisierungskomponente mittels eines mobilen Gerätes, und
- Figur 2: die Erzeugung und Übermittlung von Zugriffsinformationen zu einem mobilen Gerät.

Die Figur 1 zeigt schematisch den lokalen Zugriff einer Bedienperson OP (Operator) auf eine Automatisierungskomponente HMI (HMI = Human-Machine Interface). Im vorliegenden Fall wird mit der Automatisierungskomponente HMI, die ein klassisches Bedien- und Beobachtungsgerät darstellt, eine Maschine oder dergleichen gesteuert, beispielsweise ein Roboter. Eine solche Maschine A ist in der Figur 2 exemplarisch dargestellt; in anderen Ausführungsbeispielen kann die auf der Automatisierungskomponente HMI dargestellte Benutzeroberfläche auch direkt von einer entsprechend ausgestatteten Maschine A angezeigt werden. Folglich ist mit Automatisierungskomponente HMI im Kontext der vorliegenden Erfindung der bedienbare Teil einer Maschine A bzw. deren Benutzerschnittstelle gemeint.

Grundsätzlich wird im Kontext der Figur 1 davon ausgegangen, dass auf einem mobilen Gerät SD (smart device) der Bedienperson OP eine gültige Zugangsinformation CR (credential) gespeichert ist, beispielsweise nach Art einer virtuellen Kreditkarte auf ein Mobiltelefon, welches zur drahtlosen Bezahlung eingesetzt wird. Bei Annäherung des mobilen Gerätes SD an ein Funkmodul RFU (RFID Unit) der Automatisierungskomponente HMI nehmen die beiden Geräte in einem Schritt A Kontakt miteinander auf, wonach die Bedienperson OP in einem Schritt B die Nutzung der Zugangsinformation CR freigibt, beispielsweise durch eine Gesichtserkennung, durch Eingabe eines Fingerabdrucks, Eingabe einer PIN oder dergleichen. In einem Schritt C wird für diese Bedienperson OP eine Sitzung (session) auf der Automatisierungskomponente HMI eröffnet. Dabei prüft die Automatisierungskomponente HMI wiederkehrend, ob sich das mobile Gerät SD noch in Funkreichweite des Funkmoduls RFU befindet, anderenfalls wird die Sitzung geschlossen. Nun kann die Bedienperson OP mittels des mobilen Gerätes SD die Automatisierungskomponente HMI bedienen, beispielsweise mittels einer App oder einer anderen grafischen Benutzeroberfläche (z.B. in einem Browser), wobei der dazu notwendige Datentransfer nicht zwingend über das Funkmodul RFU abgewickelt werden muss. Zudem kann die Bedienperson OP auch auf vorab gespeicherte Hintergrundinformationen und andere digitale Hilfsmittel, Dateien etc. auf seinem mobilen Gerät SD zugreifen, die zuvor situationsbezogen und bezogen auf die konkrete Automatisierungskomponente HMI bzw. auf den Betriebszustand einer damit verbundenen Maschine A (in Figur 2 dargestellt) und optional auch auf die Kenntnisse (skills) der Bedienperson OP zugeschnitten sind.

Die Figur 2 zeigt exemplarisch, wie erfindungsgemäß ein Mitarbeiter eines Support-Teams ST situationsbezogen als Bedienperson OP ausgewählt und mit Zugangsinformationen CR und spezifischen Informationen über einen aktuellen Betriebszustand der Maschine A versorgt wird.

Es sei angenommen, dass an der Maschine A ein kritischer Betriebszustand auftritt, beispielsweise ein Fehler oder eine Maschinenstörung, wobei Informationen über diesen aktuellen Betriebszustand in Gestalt einer Fehlermeldung / Fehlercode von der Maschine A in einem Schritt 1 zu der Automatisierungskomponente HMI übermittelt werden. Dieser Fehler wird auf einer Benutzeroberfläche der Automatisierungskomponente HMI dargestellt, wobei ein Maschinenbediener oder eine andere anwesende Person einen Button "Create CR" betätigen kann, um eine qualifizierte Bedienperson OP hinzuzuziehen. In einer hier nicht weiter dargestellten Variante kann auch auf diesen Schritt verzichtet werden; die Automatisierungskomponente HMI oder ein (nicht dargestellter) Wartungsserver oder ein Host-System HS kann dazu derart eingestellt sein, dass bestimmten Fehlern automatisch und ohne weiteren manuellen Eingriff eine qualifizierte Bedienperson OP ausgewählt und hinzugezogen wird. In einem solchen Fall kann die Automatisierungskomponente HMI den Prozess der Auswahl dieser Bedienperson OP und die Erzeugung von maßgeschneiderten Zugangsinformationen CR für den oder die ausgewählten Bedienpersonen OP vornehmen, geeignete spezifische Informationen (Maschine Info: Name, Location, Issues; Trace Files, etc.) über den Fehler bzw. Betriebszustand zusammenstellen, diese mit den Zugangsinformationen CR jeweils bündeln und an den oder die ausgewählten Bedienpersonen OP übermitteln.

In der nachfolgend diskutierten Variante wird nach der Detektierung des Betriebszustandes bzw. Fehlers und nach Betätigung des Buttons "Create CR" oder alternativ auch ohne diesen Bestätigungsschritt die Fehlermeldung an den Arbeitsplatz eines Administrators ADM übermittelt (Schritt 2a). Dem Administrator ADM wird von seinem Arbeitsplatzrechner bzw. Server oder dem Host-System HS aus einer Datenbank mit Mitarbeitern seines Support-Teams ST eine Anzahl Mitarbeiter vorgeschlagen, die in der Datenbank als geeignet für die Bearbeitung von Fehlern beim detektierten Betriebszustand bzw. Fehler gekennzeichnet sind. Jedem dieser Mitarbeiter sind gemäß seiner jeweiligen Qualifikation und Zulassung bestimmte Berechtigungsklassen zum Zugriff auf die Automatisierungskomponente HMI zugewiesen, beispielsweise Administratorrechte, normale Benutzerrechte, eingeschränkte Benutzerrechte oder dergleichen. Für jeden der ausgewählten Nutzer wird nun eine Zugangsinformationen erzeugt oder aus einem Mitarbeiterverzeichnis abgerufen, wobei die entsprechenden Zugangsberechtigungen (Administrator, normaler Nutzer, eingeschränkter Benutzer etc.) der jeweiligen Zugangsinformation entweder zugeordnet oder direkt in diese eingearbeitet werden.

An die Automatisierungskomponente HMI wird nun eine Liste mit den vergebenen, gültigen Zugangsinformationen und den jeweiligen Einschränkungen bzw. Freigaben übermittelt; in dem Fall, in dem die Einschränkungen Bestandteil des der digitalen Zugangsinformationen CR sind, müssen die letztgenannten Informationen aber nicht an die Automatisierungskomponente HMI übermittelt werden. Der Administrator ADM erzeugt nun spezifische Informationen über den vorliegenden Betriebszustand, die beispielsweise eine Beschreibung der vorliegenden Fehler (issues), Auszüge eines elektronischen Betriebshandbuches der entsprechenden Maschine A, eine für den vorliegenden Betriebszustand notwendige Diagnose-Software oder ein Verweis (Link) zu einer solchen Software, Trace-files (Dateien mit Diagnoseinformationen) und dergleichen umfassen. Vorteilhaft werden diese zusätzlichen spezifischen Informationen teil- oder vollautomatisch von dem Computer oder Server des Administrators ADM, oder, in einer anderen Variante, durch die Automatisierungskomponente HMI bereitgestellt. Dies kann beispielsweise dadurch geschehen, dass in einer Entscheidungsmatrix nicht nur festgelegt ist, welche Art von Mitarbeiter aus dem Support-Team ST für welchen Betriebszustand oder Fehler als Bearbeiter infrage kommt, sondern auch, bei welchem Betriebszustand oder Fehler welche Informationen über die Maschine A bereitgestellt werden müssen, welche Zugriffsrechte erforderlich sind, wie lange Zugriffsrechte gültig sein müssen, und dergleichen.

Die nun erzeugten Zugangsinformationen CR werden (Schritt 2b) zusammen mit den spezifischen Informationen (oder Angaben bzw. Links oder URLs über diese) an das Host-System HS übermittelt und dann von dem Host-System HRS mit den spezifischen Informationen gebündelt und einzeln an die ausgewählten Mitarbeiter des Support-Teams ST bzw. deren persönliche mobilen Geräte SD verschlüsselt übermittelt (Schritt 3). Die ausgewählten Mitarbeiter des Support-Teams ST haben nun die Möglichkeit, den hinsichtlich Art, Dringlichkeit und abgeschätzter Bearbeitungsdauer spezifizierten Auftrag auf ihrem mobilen Gerät anzuzeigen und anzunehmen. Gegebenenfalls können die ausgewählten Mitarbeiter des Support-Teams ST auch in einer festgelegten Reihenfolge, beispielsweise in der Reihenfolge einer absteigenden Qualifikation oder aufsteigenden Kosten, Entfernung etc., benachrichtigt werden. Nimmt ein Mitarbeiter den Auftrag an, ergeht eine entsprechende Rückmeldung an das Host-System HS, welches das Auftragsangebot für die anderen Mitarbeiter storniert oder pausiert. Die mit dem Datenpaket übermittelten Zugangsinformationen CR werden in dem gesicherten Informationsspeicher WAL (wallet) des mobilen Gerätes SD desjenigen Mitarbeiters, der die Serviceanfrage positiv quittiert hat, übernommen. Die spezifischen Informationen werden je nach Typ der Informationsbestandteile entweder im Dateisystem des mobilen Gerätes SD abgelegt, in einem Browser angezeigt, oder in einer speziellen Service-Applikation (App) gespeichert. Der jetzt ausgewählte Mitarbeiter kann sich nun in die Fabrik mit der Maschine A bzw. der Automatisierungskomponente HMI begeben und als Bedienperson OP auf die Automatisierungskomponente HMI zugreifen, wie das bereits anhand der Figur 1 exemplarisch erläutert wurde.

Mit dem vorstehend beschriebenen Verfahren kann situationsabhängig ein Zugriff auch externer Personen zu industriellen Anlagen, Maschinen oder Komponenten gegeben werden, wobei man sich zunutze macht, dass heutzutage nahezu jede Person über ein persönliches mobiles Gerät SD (z.B. Mobiltelefon, Tablet-PC, Laptop) verfügt. Dieses ist Zugangsschlüssel, Bediengerät, Hilfesystem und Datenspeicher in einem. Dabei werden gängige Bedien- und Kommunikationsmuster verwendet, die jedem Mitarbeiter ohnehin vertraut sind. Die beschriebene Infrastruktur macht es möglich, Art, Dauer und Umfang der Zugangsberechtigung für jede Person individuell festzulegen und zusammen mit allen erforderlichen Informationen und Hilfsmitteln individuell für die vorliegende Situation bzw. Betriebszustand zu erstellen und dem oder den ausgewählten Mitarbeitern schon im Vorfeld zur Verfügung zu stellen. Mit dem vorgeschlagenen Verfahren bzw. vorgeschlagenen Infrastruktur ist es zudem möglich, in dem Konzept umfangreiche Sicherheitsmaßnahmen wie 2-Faktor-Authentifizierung, Einsatz biometrischer Authentifizierung etc. zu integrieren. Mit dem Konzept können sowohl interne als auch externe Mitarbeiter einen permanenten oder temporären Zugriff (Full Access, Limited Access) erlangen.

## Patentansprüche

1. Verfahren zum gesicherten Zugriff auf eine industrielle Automatisierungskomponente (HMI) mittels eines mobilen Gerätes (SD),
wobei die Automatisierungskomponente (HMI) für einen unautorisierten Zugriff gesperrt ist,
wobei die Automatisierungskomponente (HMI) mit einer Funkeinheit (RFU) zum Empfang drahtlos übermittelter Zugangsinformationen (CR) ausgestattet ist,
wobei auf dem mobilen Gerät (SD) eine Zugangsinformation (CR) gespeichert und bei Aufenthalt in der Nähe zu der Automatisierungskomponente an die Funkeinheit (RFU) übertragen und in der Automatisierungskomponente (HMI) geprüft wird und danach im positiven Fall die Automatisierungskomponente (HMI) zum Zugriff freigegeben wird, **dadurch gekennzeichnet,**
**dass** in einem ersten Schritt zumindest eine für einen aktuellen Betriebszustand zuständige Bedienperson (OP) ausgewählt wird,
**dass** in einem zweiten Schritt durch die Automatisierungskomponente (HMI) oder eine zugeordnete Serverkomponente (HS) die für die ausgewählte Bedienperson (OP) Zugangsinformation (CR) ausgewählt oder erstellt wird,
**dass** in einem dritten Schritt spezifische Informationen über den Betriebszustand und die Zugangsinformation (CR) zu dem mobilen Gerät (SD) der Bedienperson (OP) übertragen werden, und
**dass** in einem vierten Schritt die Bedienperson (OP) mittels der Zugangsinformation (CR) Zugriff auf die Automatisierungskomponente (HMI) erlangt und durch das mobile Gerät (SD) Eingaben oder andere Bedienhandlungen an der Automatisierungskomponente (HMI) vornimmt, wozu der Bedienperson (OP) die spezifischen Informationen zur Verfügung gestellt werden.

2. Verfahren nach Patentanspruch 1,
**dadurch gekennzeichnet,**
**dass** der Betriebszustand eine Störung, Fehler, Alarmzustand oder ein anderes Ereignis ist und die Verfahrensschritte beim Auftreten eines solchen Ereignisses initiiert werden.

3. Verfahren nach einem der vorhergehenden Patentansprüche, **dadurch gekennzeichnet,**
**dass** anhand einer Identität oder anhand von gespeicherten Qualifikationen oder anhand zugeordneter personenbezogener Restriktionen die jeweilige Zugangsberechtigung der jeweiligen Bedienperson (OP) festgelegt wird und diese festgelegte Zugangsberechtigung mit der jeweiligen Zugangsinformation (CR) verknüpft wird und damit die nachfolgenden Zugriffe der jeweiligen Bedienperson (OP) entsprechend eingeschränkt oder freigegeben wird.

4. Verfahren nach einem der vorhergehenden Patentansprüche, **dadurch gekennzeichnet,**
**dass** als die Automatisierungskomponente (HMI) ein industrielles Bedien- und Beobachtungsgerät oder eine Steuerungseinrichtung für einen industriellen Prozess oder eine Fertigungsautomatisierung verwendet wird.

5. Verfahren nach einem der vorhergehenden Patentansprüche, dass gekennzeichnet,
dass die Funkeinheit (RFU) zum Austausch von Informationen mittels eines RFID-Protokolls eingerichtet ist, insbesondere zu einem bidirektionalen Datenaustausch.

6. Verfahren nach einem der vorhergehenden Patentansprüche, **dadurch gekennzeichnet,**
**dass** die spezifischen Informationen und die Zugangsinformation (CR) gebündelt zu dem mobilen Gerät (SD) übertragen werden, insbesondere zu einer industriellen Applikation des mobilen Gerätes (SD).

7. Verfahren nach einem der vorhergehenden Patentansprüche, dass gekennzeichnet,
dass die Zugangsinformation (CR) in einem geschützten Informationsspeicher des mobilen Gerätes (SD) gespeichert wird, insbesondere in einem elektronischen Wallet.

8. Verfahren nach Patentanspruch 7,
**dadurch gekennzeichnet,**
**dass** der Informationsspeicher mit biometrischen Informationen oder Eigenschaften der jeweiligen Bedienperson (OP) geschützt wird, wobei sich die Bedienperson (OP) mittels dieser biometrischen Informationen oder Eigenschaften vor einer Übertragung der Zugangsinformation (CR) zu der Automatisierungskomponente (HMI) an dem mobilen Gerät (SD) identifiziert.

9. Verfahren nach einem der vorhergehenden Patentansprüche, **dadurch gekennzeichnet,**
**dass** die spezifischen Informationen zur Erstellung oder Konfigurierung einer auf die Automatisierungskomponente (HMI) und/oder den jeweiligen Betriebszustand angepassten grafischen Benutzerschnittstelle auf dem mobilen Gerät (SD) zur Bedienung der Automatisierungskomponente (HMI) verwendet werden.

10. Verfahren nach einem der vorhergehenden Patentansprüche,
**dadurch gekennzeichnet,**
**dass** anhand des aktuellen Betriebszustandes eine Anzahl geeigneter Bedienpersonen (OP) aus einer Anzahl verfügbarer Bedienpersonen ausgewählt und den mobilen Geräten (SD) dieser ausgewählten Bedienpersonen (OP) die spezifischen Informationen und die jeweilige Zugangsinformation (CR) übermittelt werden.

11. Verfahren nach Patentanspruch 10,
**dadurch gekennzeichnet,**
**dass** die Bedienpersonen (OP) aufgrund gespeicherter vorhergehender manueller Auswahlen von Bedienpersonen (OP) oder anhand von den verfügbaren Bedienpersonen (OP) zugeordneten Fähigkeiten in Bezug zu vergleichbaren Betriebszuständen automatisch vorgeschlagen oder ausgewählt werden.

12. Verfahren nach einem der vorhergehenden Patentansprüche,
**dadurch gekennzeichnet,**
**dass** mit den spezifischen Informationen eine Handlungsanweisung und/oder digitale Hilfsmittel und/oder eine für den aktuellen Betriebszustand angepasste Software-Variante oder andere Dateien für die Automatisierungskomponente (HMI) an das mobile Gerät (SD) übermittelt werden.

13. Verfahren nach Patentanspruch 12,
dass gekennzeichnet,
dass nach einer Freigabe durch die Bedienperson (OP) die angepasste Software-Variante oder eine Datei oder Bedienbefehle von dem mobilen Gerät (SD) zu der Automatisierungskomponente (HMI) übermittelt werden.

14. Anordnung mit einer industriellen Automatisierungskomponente (HMI) und mit einem mobilen Gerät (SD) zum gesicherten Zugriff auf die industrielle Automatisierungskomponente (HMI) mittels des mobilen Gerätes (SD),
**dadurch gekennzeichnet,**
**dass** die Automatisierungskomponente (HMI) mit einem Funkmodul zum Austausch von Zugangsinformationen (CR) mit einem mobilen Gerät (SD) ausgestattet ist,
**dass** die Automatisierungskomponente (HMI) oder eine mit ihr verknüpfte Serverkomponente (HS) zu einer auf einen aktuellen Betriebszustand der Automatisierungskomponente (HMI) bezogenen Generierung der Zugangsinformation (CR) für eine ausgewählte Bedienperson (OP) und zur Erstellung von spezifischen Informationen über den Betriebszustand und zu einer Übertragung der Zugangsinformation (CR) und der spezifischen Informationen zu dem mobilen Gerät (SD) eingerichtet ist,
**dass** das mobile Gerät (SD) zur Authentifizierung der Bedienperson (OP) gegenüber der Automatisierungskomponente (HMI) mittels Übertragung der Zugangsinformation (CR) zu dem Funkmodul eingerichtet ist, und
**dass** das mobile Gerät (SD) zur Anzeige und/oder Nutzung der spezifischen Informationen für eine Bedienung oder Beeinflussung der Automatisierungskomponente (HMI) eingerichtet ist.

## Claims

1. Method for secured access to an industrial automation component (HMI) by means of a mobile device (SD),
wherein the automation component (HMI) is blocked for unauthorised access,
wherein the automation component (HMI) is equipped with a radio unit (RFU) for receiving wirelessly transmitted access information (CR),
wherein access information (CR) is saved on the mobile device (SD) and, when staying in the vicinity of the automation component, is transferred to the radio unit (RFU) and is checked in the automation component (HMI) and afterwards, in the positive case, the automation component (HMI) is approved for access,
**characterised in that**
in a first step, at least one operator (OP) responsible for a current operating state is selected,
in a second step, the access information (CR) for the selected operator (OP) is selected or created by the automation component (HMI) or an assigned server component (HS),
in a third step, specific information regarding the operating state and the access information (CR) are transferred to the mobile device (SD) of the operator (OP), and
in a fourth step, the operator (OP) gains access to the automation component (HMI) by means of the access information (CR) and, by way of the mobile device (SD), carries out inputs or other operator actions on the automation components (HMI), to which end the specific information is made available to the operator (OP).

2. Method according to claim 1,
**characterised in that**
the operating state is a disruption, error, alarm state or another event and the method steps are initiated when such an event occurs.

3. Method according to one of the preceding claims,
**characterised in that**,
on the basis of an identity, or on the basis of stored qualifications, or on the basis of assigned person-related restrictions, the respective access authorisation of the respective operator (OP) is specified and this specified access authorisation is linked to the respective access information (CR) and thus the subsequent accesses by the respective operator (OP) are restricted or approved accordingly.

4. Method according to one of the preceding claims,
**characterised in that**
an industrial operator control and monitoring device or a control facility for an industrial process or manufacturing automation is used as the automation component (HMI).

5. Method according to one of the preceding claims,
**characterised in that**
the radio unit (RFU) is configured to exchange information by means of an RFID protocol, in particular for bidirectional data exchange.

6. Method according to one of the preceding claims,
**characterised in that**
the specific information and the access information (CR) are transferred to the mobile device (SD) in a bundled manner, in particular to an industrial application of the mobile device (SD).

7. Method according to one of the preceding claims,
**characterised in that**
the access information (CR) is stored in a protected information store of the mobile device (SD), in particular in an electronic wallet.

8. Method according to claim 7,
**characterised in that**
the information store is protected using biometric information or properties of the respective operator (OP), wherein the operator (OP) is identified on the mobile device (SD) by means of this biometric information or properties before the access information (CR) is transferred to the automation component (HMI).

9. Method according to one of the preceding claims,
**characterised in that**
the specific information is used to create or configure a graphical user interface, which is adapted to the automation component (HMI) and/or the respective operating state, on the mobile device (SD) for operation of the automation component (HMI).

10. Method according to one of the preceding claims,
**characterised in that**,
on the basis of the current operating state, a number of suitable operators (OP) are selected from a number of available operators and the specific information and the respective access information (CR) are transmitted to the mobile devices (SD) of said selected operators (OP).

11. Method according to claim 10,
**characterised in that**
the operators (OP) are automatically proposed or selected on the basis of stored previous manual selections of operators (OP) or on the basis of capabilities assigned to the available operators (OP) in relation to comparable operating states.

12. Method according to one of the preceding claims,
**characterised in that**,
with the specific information, an instruction and/or digital aid and/or a software variant adapted to the current operating state or other files for the automation component (HMI) are transmitted to the mobile device (SD).

13. Method according to claim 12,
**characterised in that**,
after approval by the operator (OP), the adapted software variant or a file or operating commands are transmitted from the mobile device (SD) to the automation component (HMI).

14. Arrangement with an industrial automation component (HMI) and with a mobile device (SD) for secured access to the industrial automation component (HMI) by means of the mobile device (SD),
**characterised in that**
the automation component (HMI) is equipped with a radio module for exchanging access information (CR) with a mobile device (SD),
the automation component (HMI) or a server component (HS) linked to it is configured for generation, related to a current operating state of the automation component (HMI), of the access information (CR) for a selected operator (OP) and for the creation of specific information regarding the operating state and for transfer of the access information (CR) and the specific information to the mobile device (SD),
the mobile device (SD) is configured for the authentication of the operator (OP) in relation to the automation component (HMI) by means of transferring the access information (CR) to the radio module, and
the mobile device (SD) is configured for the display and/or use of the specific information for operating or influencing the automation component (HMI).

## Revendications

1. Procédé d'accès sécurisé à un composant (HMI) industriel d'automatisation au moyen d'un appareil (SD) mobile,
dans lequel le composant (HMI) d'automatisation est bloqué pour un accès non autorisé,
dans lequel le composant (HMI) d'automatisation est équipé d'une unité (RFU) radio de réception d'informations (CR) d'accès transmises sans fil,
dans lequel, sur l'appareil (SD) mobile, on met en mémoire une information (CR) d'accès et, lors d'un séjour à proximité du composant d'automatisation, on la transmet à l'unité (RFU) radio et on la contrôle dans le composant (HMI) d'automatisation et ensuite, dans le cas positif, on valide pour l'accès le composant (HMI) d'automatisation,
**caractérisé**
**en ce que**, dans un premier stade, on choisit au moins une personne (OP) de service compétente pour un état de fonctionnement en cours,
**en ce que**, dans un deuxième stade, on choisit ou on établit, par le composant (HMI) d'automatisation ou par un composant (HS) serveur associé, l'information (CR) d'accès pour la personne (OP) de service choisie,
**en ce que**, dans un troisième stade, l'on transmet des informations spécifiques sur l'état de fonctionnement à l'information (CR) d'accès et l'appareil (SD) mobile de la personne (OP) de service, et
**en ce que**, dans un quatrième stade, la personne (OP) de service obtient, au moyen de l'information (CR) d'accès, accès au composant (HMI) d'automatisation et effectue, par l'appareil (SD) mobile, des entrées ou d'autres manipulations de manœuvre sur le composant (HMI) d'automatisation, les informations spécifiques étant à cet effet mises à disposition de la personne (OP) de service.

2. Procédé suivant la revendication 1,
**caractérisé**
**en ce que** l'état de fonctionnement est une panne, un défaut, un état d'alerte ou un autre évènement et on lance les stades du procédé à l'apparition d'un évènement de ce genre.

3. Procédé suivant l'une des revendications précédentes,
**caractérisé**
**en ce que**, à l'aide d'une identité ou à l'aide de qualifications mises en mémoire ou à l'aide de restrictions associées se rapportant à une personne, on fixe l'autorisation respective d'accès de la personne (OP) de service respective et on combine cette autorisation d'accès fixée à l'information (CR) d'accès respective et on restrient ou on valide en conséquence les accès suivants de la personne (OP) de service respective.

4. Procédé suivant l'une des revendications précédentes,
**caractérisé**
**en ce que** l'on utilise, comme composant (HMI) d'automatisation, un appareil industriel de manœuvre ou d'observation ou un dispositif de commande d'un processus industriel ou d'une automatisation de fabrication.

5. Procédé suivant l'une des revendications précédentes,
**caractérisé**
**en ce que** l'unité (RFU) radio est agencée pour l'échange d'informations au moyen d'un protocole RFID, en particulier pour un échange bidirectionnel de données.

6. Procédé suivant l'une des revendications précédentes,
**caractérisé**
**en ce que** l'on transmet en faisceau à l'appareil (SD) mobile les informations spécifiques et l'information (CR) d'accès, en particulier à une application industrielle de l'appareil (SD) mobile.

7. Procédé suivant l'une des revendications précédentes,
**caractérisé**
**en ce que** l'on met en mémoire l'information (CR) d'accès dans une mémoire d'informations protégée de l'appareil (SD) mobile, en particulier dans une wallet électronique.

8. Procédé suivant la revendication 7,
**caractérisé**
**en ce que** l'on protège la mémoire d'informations ayant des informations biométriques ou des propriétés de la personne (OP) de service respective, dans lequel la personne (OP) de service s'identifie auprès de l'appareil (SD) mobile au moyen de ces informations ou propriétés biométriques, avant une transmission de l'information (CR) d'accès au composant (HMI) d'automatisation.

9. Procédé suivant l'une des revendications précédentes,
**caractérisé**
**en ce que** l'on utilise, pour la manœuvre du composant (HMI) d'automatisation, les informations spécifiques d'établissement ou de configuration d'une interface d'utilisateur graphique, adaptée au composant (HMI) d'automatisation et/ou à l'état de fonctionnement respectif, sur l'appareil (SD) mobile.

10. Procédé suivant l'une des revendications précédentes,
**caractérisé**
**en ce que**, à l'aide de l'état de fonctionnement en cours, on choisit un nombre de personnes (OP) de service approprié dans un nombre de personnes de service disponibles et on transmet, aux appareils (SD) mobiles de ces personnes (OP) de service sélectionnées, les informations spécifiques et l'information (CR) d'accès respective.

11. Procédé suivant la revendication 10,
**caractérisé**
**en ce que** l'on propose ou on choisit automatiquement les personnes (OP) de service sur la base de choix manuels précédents mis en mémoire de personnes (OP) de service ou à l'aide de capacités associées aux personnes (OP) de service disponibles en rapport avec des états de fonctionnement comparables.

12. Procédé suivant l'une des revendications précédentes,
**caractérisé**
**en ce que** l'on transmet, à l'appareil (SD) mobile, avec les informations spécifiques, une instruction de manipulation et/ou un moyen auxiliaire numérique et/ou une variante logicielle adaptée à l'état de fonctionnement en cours ou d'autres fichiers pour le composant (HMI) d'automatisation.

13. Procédé suivant la revendication 12,
**caractérisé**
**en ce qu'**après une validation par la personne (OP) de service, on transmet la variante logicielle adaptée ou un fichier ou des instructions de manœuvre de l'appareil (SD) mobile au composant (HMI) d'automatisation.

14. Dispositif comprenant un composant (HMI) industriel d'automatisation et comprenant un appareil (SD) mobile pour l'accès sécurisé au composant (HMI) industriel d'automatisation au moyen de l'appareil (SD) mobile,
**caractérisé**
**en ce que** le composant (HMI) d'automatisation est équipé d'un module radio pour l'échange d'informations (CR) d'accès avec un appareil (SD) mobile,
**en ce que** le composant (HMI) d'automatisation ou un composant (HS) serveur, qui lui est combiné, est agencé pour une création, rapportée à un état de fonctionnement en cours du composant (HMI) d'automatisation, de l'information (CR) d'accès pour une personne (OP) de service choisie et pour l'établissement d'informations spécifiques sur l'état de fonctionnement et pour une transmission de l'information (CR) d'accès et les informations spécifiques à l'appareil (SD) mobile,
**en ce que** l'appareil (SD) mobile est agencé pour l'identification de la personne (OP) de service vis-à-vis du composant (HMI) d'automatisation au moyen de la transmission de l'information (CR) au module radio, et
**en ce que** l'appareil (SD) mobile est agencé pour l'affichage et/ou l'utilisation des informations spécifiques pour commander ou influencer le composant (HMI) d'automatisation.
